# EUROPEAN PATENT APPLICATION

(11) **EP 4 166 820 A1**
(43) Date of publication of application: **19.04.2023**
(21) Application number: 21822493.9
(22) Date of filing: 09.06.2021
(51) Int. Cl.: F16H 59/44, F16H 59/52, F16H 59/66, F16H 63/50, B60W 20/19, B60W 20/40, B60K 6/365, B60K 6/445, B60K 6/52, B60W 10/02, B60W 10/04, B60W 10/06, B60W 10/08, B60L 50/16, F16H 61/02

(54) **VEHICULAR DRIVE DEVICE**

(30) Priority: 12.06.2020 JP 2020102446
(71) Applicant: AISIN CORPORATION, Aichi 448-8650 (JP)
(72) Inventor: TSUDA, Kohei, Kariya-shi, Aichi 448-8650 (JP); KUSABE, Keiichirou, Kariya-shi, Aichi 448-8650 (JP); NAKAYA, Bumpei, Kariya-shi, Aichi 448-8650 (JP); MATSUMURA, Yasuhiro, Kariya-shi, Aichi 448-8650 (JP)
(74) Representative: TBK
(86) International application number: PCT/JP2021/021914
(87) International publication number: WO 2021/251430

(57) **Abstract**

When it is determined that predicted required drive power (Tf) which is drive power predicted to be required for a vehicle is greater than a first threshold value (TH1) set within a range of drive power that can be outputted in a second mode, or when actual required drive power (Ta) is greater than the first threshold value (TH1), a control device (10) sets an operating mode to a first mode in which a first engagement device (CL1) is brought into an engaged state and a second engagement device (CL2) is brought into a disengaged state, to control a rotating electrical machine (MG1) and an internal combustion engine (EG) to output the actual required drive power (Ta). In other cases, the control device (10) sets the operating mode to the second mode in which the first engagement device (CL1) is brought into a disengaged state and the second engagement device (CL2) is brought into an engaged state, to control the rotating electrical machine (MG1) to output the actual required drive power (Ta).

## Description

### TECHNICAL FIELD

The present invention relates to a vehicle drive device having a plurality of operating modes.

### BACKGROUND ART

An example of such a vehicle drive device is disclosed in the following Patent Literature 1. In the following description of the Background Art section (description of the "Background Art" section and the "Technical Problems" section), member names and reference signs in Patent Literature 1 are quoted in parentheses.

A vehicle drive device of Patent Literature 1 has, as operating modes, a power-split mode in which a rotating electrical machine (5) outputs reaction torque to output torque of an internal combustion engine (1), and a vehicle travels by combined torque of the internal combustion engine (1) and the rotating electrical machine (5); and a parallel hybrid mode in which the vehicle travels by output torque of both of the internal combustion engine (1) and the rotating electrical machine (5).

### CITATIONS LIST

### PATENT LITERATURE

Patent Literature 1: JP 9-46820 A

### SUMMARY OF INVENTION

### TECHNICAL PROBLEMS

In the vehicle drive device of Patent Literature 1, when required drive power which is drive power required for the vehicle is relatively high due to, for example, a driver deeply stepping on an accelerator pedal, the operating mode is switched to either one of the power-split mode and the parallel hybrid mode, based on the travel speed of the vehicle (see FIGS. 14 and 15 of Patent Literature 1).

However, when the operating mode is switched to either one of the power-split mode and the parallel hybrid mode from a state in which the internal combustion engine is stopped, there is a need to start the internal combustion engine. Hence, if switching of the operating mode such as that described above is performed after relatively high required drive power is actually requested, then it requires time for drive power that is actually outputted to reach the required drive power. As a result, there has been a delay in outputting drive power corresponding to the required drive power after the required drive power is requested.

Hence, it is desired to implement a vehicle drive device that can promptly output drive power corresponding to required drive power when switching is performed from a state in which an internal combustion engine is stopped to an operating mode in which the required drive power is outputted using drive power of the internal combustion engine.

### SOLUTIONS TO PROBLEMS

A characteristic configuration of a vehicle drive device in view of the above description is such that
the vehicle drive device includes:
an input member that is drive-coupled to an internal combustion engine included in a vehicle;
an output member that is drive-coupled to wheels;
a rotating electrical machine including a rotor;
a distribution differential gear mechanism including a first rotating element, a second rotating element, and a third rotating element, the first rotating element being drive-coupled to the input member, and the third rotating element being drive-coupled to the rotor;
a first engagement device that disengages and engages power transmission between the input member and the first rotating element;
a second engagement device that disengages and engages power transmission between two rotating elements selected from among three rotating elements, the first rotating element, the second rotating element, and the third rotating element; and
a control device that controls the rotating electrical machine, the internal combustion engine, the first engagement device, and the second engagement device, and
a first mode and a second mode are provided as operating modes,
the distribution differential gear mechanism is formed such that order of rotational speed is the first rotating element, the second rotating element, and the third rotating element,
in the first mode, the first engagement device is brought into an engaged state and the second engagement device is brought into a disengaged state, to output a combination of drive power of the rotating electrical machine and drive power of the internal combustion engine to the output member from the second rotating element through the distribution differential gear mechanism,
in the second mode, the first engagement device is brought into a disengaged state and the second engagement device is brought into an engaged state, and
the control device
determines whether predicted required drive power is greater than a defined first threshold value set within a range of drive power that can be outputted in the second mode, the predicted required drive power being drive power predicted to be required for the vehicle,
sets the operating mode to the first mode to control the rotating electrical machine and the internal combustion engine to output actual required drive power, when it is determined that the predicted required drive power is greater than the first threshold value or when the actual required drive power is greater than the first threshold value, the actual required drive power being drive power currently required for the vehicle, and
sets the operating mode to the second mode to control the rotating electrical machine to output the actual required drive power, when the actual required drive power is less than or equal to the first threshold value and it is determined that the predicted required drive power is less than or equal to the first threshold value.

According to the characteristic configuration, even when currently required drive power (actual required drive power) is less than or equal to the first threshold value, it is predicted whether future required drive power (predicted required drive power) is greater than the first threshold value. If it is predicted that the future required drive power (predicted required drive power) is greater than the first threshold value, then the operating mode is switched to the first mode so that the rotating electrical machine and the internal combustion engine are driven. As such, when it is determined that the predicted required drive power is greater than the first threshold value, the internal combustion engine is brought into an operating state at a stage before the actual required drive power becomes greater than the first threshold value. By this, when the actual required drive power has become greater than the first threshold value, the operating mode is already set to the first mode and the internal combustion engine is already in an operating state. Hence, after the actual required drive power has become greater than the first threshold value, a process of switching the operating mode to the first mode and a process of starting the internal combustion engine can be omitted. Thus, when switching is performed from a state in which the internal combustion engine is stopped to an operating mode in which required drive power is outputted using drive power of the internal combustion engine, drive power corresponding to the required drive power can be promptly outputted.

In addition, according to the characteristic configuration, in the first mode, using torque of the rotating electrical machine as a reaction force, torque of the internal combustion engine is amplified, and the amplified torque is transmitted to the output member from the second rotating element, by which the vehicle can travel. Thus, even when actual required drive power is high, the actual required drive power can be appropriately outputted by the rotating electrical machine and the internal combustion engine.

### BRIEF DESCRIPTION OF DRAWINGS

FIG. 1 is a skeleton diagram of a vehicle drive device according to an embodiment.
FIG. 2 is a control block diagram of the vehicle drive device according to the embodiment.
FIG. 3 is a diagram showing the states of engagement devices in each operating mode of the vehicle drive device according to the embodiment.
FIG. 4 is a speed diagram of a distribution differential gear mechanism and a transmission in a fourth mode according to the embodiment.
FIG. 5 is a speed diagram of the distribution differential gear mechanism and the transmission in a first mode and a third mode according to the embodiment.
FIG. 6 is a flowchart showing an example of a control process performed by a control device according to the embodiment.
FIG. 7 is a time chart showing an example of a conventional control process performed when a vehicle starts to move from a stopped state.
FIG. 8 is a time chart showing an example of a control process performed by the control device according to the embodiment when the vehicle starts to move from a stopped state.

### DESCRIPTION OF EMBODIMENTS

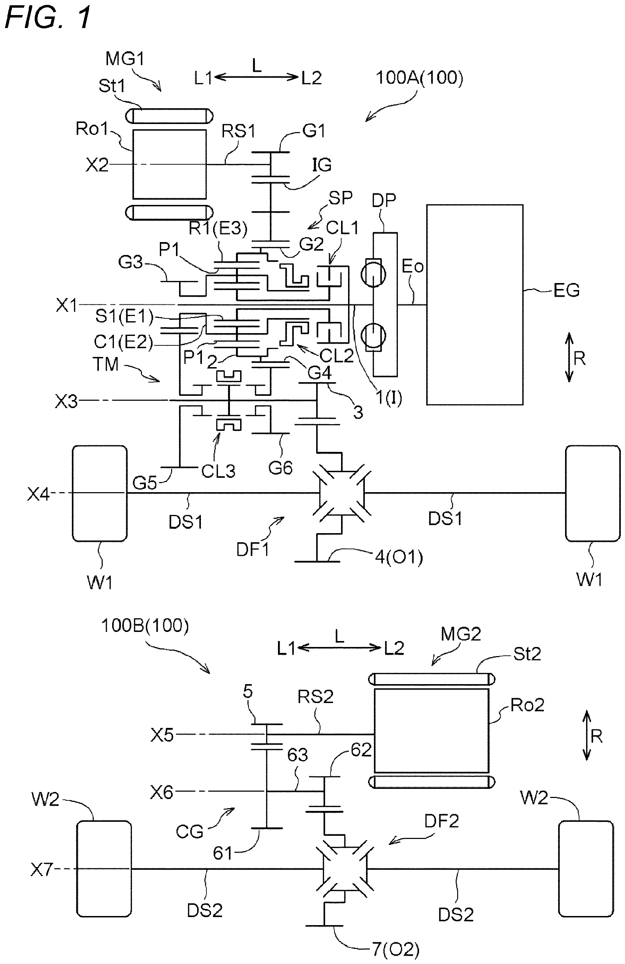

A vehicle drive device 100 according to an embodiment will be described below with reference to the drawings.
As shown in FIG. 1, in the present embodiment, the vehicle drive device 100 includes a first drive unit 100A that drives a pair of first wheels W 1; and a second drive unit 100B that drives a pair of second wheels W2. In the present embodiment, the first wheels W1 are front wheels of a vehicle and the second wheels W2 are rear wheels of the vehicle.

The first drive unit 100A includes an input member I that is drive-coupled to an internal combustion engine EG included in the vehicle; a first output member O1 that is drive-coupled to the first wheels W1; a first rotating electrical machine MG1 including a first stator St1 and a first rotor Ro1; a distribution differential gear mechanism SP; a first engagement device CL1; and a second engagement device CL2. In the present embodiment, the first drive unit 100A further includes a transmission TM and a first output differential gear mechanism DF1.

Here, the term "drive-coupled" as used in this application indicates a state in which two rotating elements are coupled together such that they can transmit drive power, and includes a state in which the two rotating elements are coupled together such that they rotate together or a state in which the two rotating elements are coupled together through one or two or more power transmission members such that they can transmit drive power. Such power transmission members include various types of members that transmit rotation at the same speed or at a changed speed, e.g., shafts, gear mechanisms, belts, and chains. Note that the power transmission members may include engagement devices that selectively transmit rotation and drive power, e.g., friction engagement devices and mesh engagement devices. Note, however, that when the term "drive-coupled" is used for each rotating element of a planetary gear mechanism, it indicates a state in which a plurality of rotating elements of the planetary gear mechanism are coupled together without any other rotating element therebetween.

In the present embodiment, the input member I, the distribution differential gear mechanism SP, the first engagement device CL1, and the second engagement device CL2 are disposed on a first axis X1 serving as the center of axis of rotation thereof. The first rotating electrical machine MG1 is disposed on a second axis X2 serving as the center of axis of rotation thereof. Furthermore, the transmission TM is disposed on a third axis X3 serving as the center of axis of rotation thereof. In addition, the first output member O1 and the first output differential gear mechanism DF1 are disposed on a fourth axis X4 serving as the center of axis of rotation thereof.

In the present embodiment, the second drive unit 100B includes a second rotating electrical machine MG2 including a second stator St2 and a second rotor Ro2; a second output member O2 that is drive-coupled to the second wheels W2; a counter gear mechanism CG; and a second output differential gear mechanism DF2.

In the present embodiment, the second rotating electrical machine MG2 is disposed on a fifth axis X5 serving as the center of axis of rotation thereof. The counter gear mechanism CG is disposed on a sixth axis X6 serving as the center of axis of rotation thereof. In addition, the second output member O2 and the second output differential gear mechanism DF2 are disposed on a seventh axis X7 serving as the center of axis of rotation thereof.

In this example, the above-described axes X1 to X7 are disposed parallel to each other. In the following description, a direction parallel to the axes X1 to X7 is referred to as the "axial direction L" of the vehicle drive device 100. A side in the axial direction L of the internal combustion engine EG on which the input member I is disposed is referred to as "axial first side L1" and the opposite side thereto is referred to as "axial second side L2". In addition, a direction orthogonal to each of the axes X1 to X7 is referred to as "radial direction R" with reference to each axis. Note that when there is no need to distinguish which axis is used as a reference axis or when it is obvious which axis is used as a reference axis, it may be simply referred to as "radial direction R".

In the present embodiment, the input member I is an input shaft 1 extending in the axial direction L. The input shaft 1 is drive-coupled to an output shaft Eo of the internal combustion engine EG through a damper device DP that attenuates fluctuations in torque to be transmitted. The internal combustion engine EG is a prime mover (a gasoline engine, a diesel engine, etc.) that is driven by fuel combustion to take out power. In the present embodiment, the internal combustion engine EG functions as a drive power source of the first wheels W1.

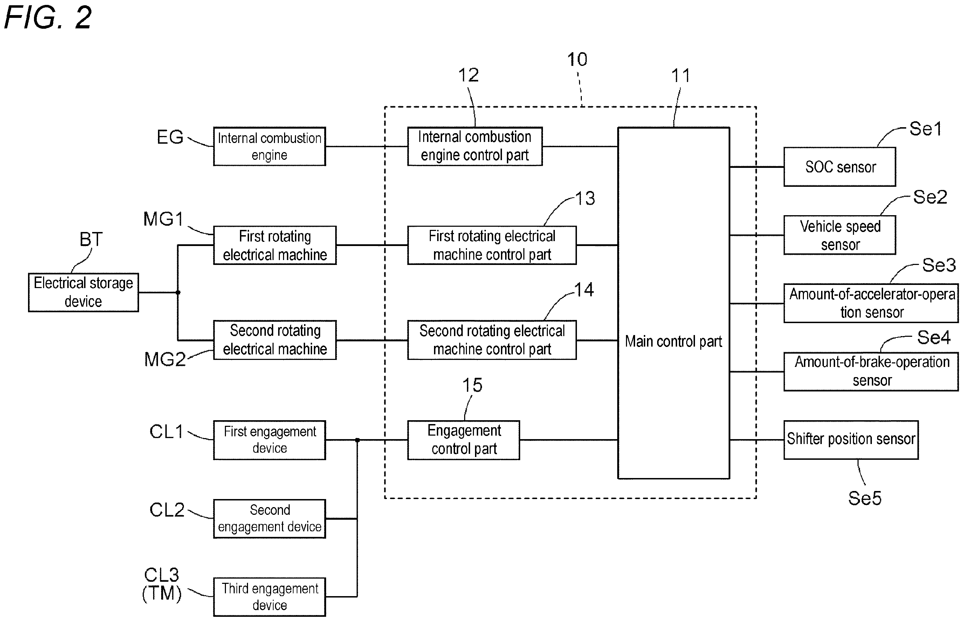

The first rotating electrical machine MG1 functions as a drive power source of the first wheels W1. The first rotating electrical machine MG1 has a function of a motor that generates power by receiving supply of electric power, and a function of a generator that generates electric power by receiving supply of power. Specifically, the first rotating electrical machine MG1 is electrically connected to an electrical storage device BT (see FIG. 2) such as a battery or a capacitor. The first rotating electrical machine MG1 generates drive power by performing motoring by electric power stored in the electrical storage device BT. In addition, the first rotating electrical machine MG1 generates electric power by drive power of the internal combustion engine EG or drive power transmitted from a first output member O1 side, to charge the electrical storage device BT.

The first stator St1 of the first rotating electrical machine MG1 is fixed to a non-rotating member (e.g., a case that accommodates the first rotating electrical machine MG1, etc.). The first rotor Ro1 of the first rotating electrical machine MG1 is rotatably supported by the first stator St1. In the present embodiment, the first rotor Ro1 is disposed on an inner side in the radial direction R of the first stator St1.

The distribution differential gear mechanism SP includes a first rotating element E1, a second rotating element E2, and a third rotating element E3. The first rotating element E1 is drive-coupled to the input member I. The third rotating element E3 is drive-coupled to the first rotor Ro1.

In the present embodiment, the distribution differential gear mechanism SP is a planetary gear mechanism including a first sun gear S1, a first carrier C1, and a first ring gear R1. In this example, the distribution differential gear mechanism SP is a single-pinion planetary gear mechanism including the first carrier C1 that supports a first pinion gear P1; the first sun gear S1 that meshes with the first pinion gear P1; and the first ring gear R1 that is disposed on outer side in the radial direction R of the first sun gear S1 and meshes with the first pinion gear P1.

The order of rotational speed of the rotating elements of the distribution differential gear mechanism SP is the first rotating element E1, the second rotating element E2, and the third rotating element E3. Thus, in the present embodiment, the first rotating element E1 is the first sun gear S1. The second rotating element E2 is the first carrier C1. The third rotating element E3 is the first ring gear R1.

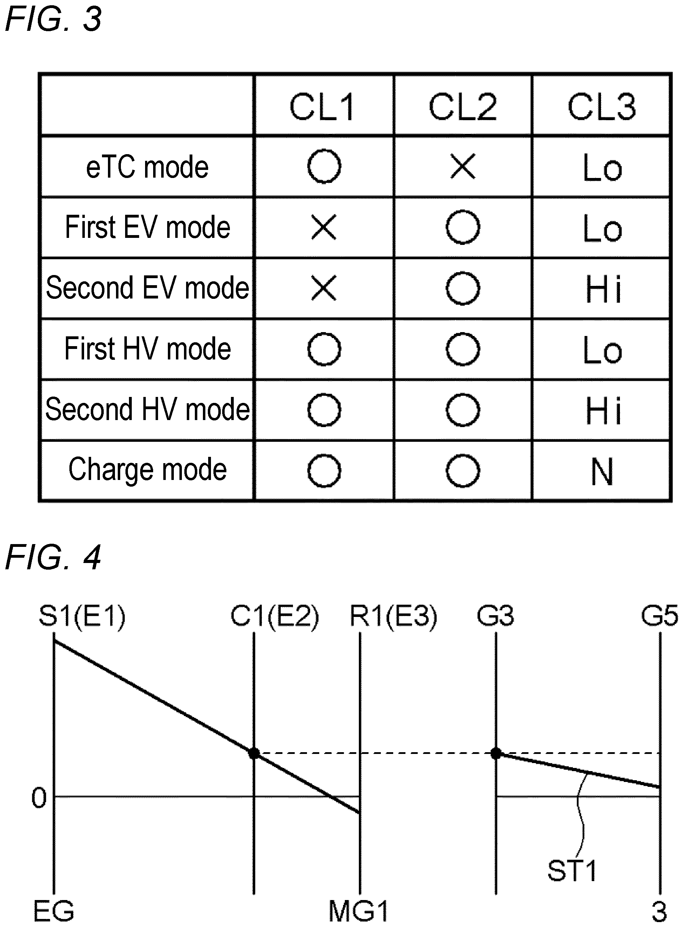

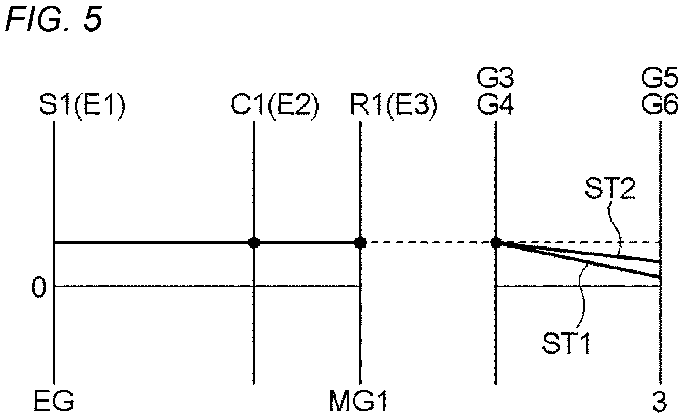

Here, the term "order of rotational speed" refers to the order of rotational speed in a rotating state of each rotating element. The rotational speed of each rotating element changes depending on the rotating state of the planetary gear mechanism, but the increasing order of rotational speed of the rotating elements is fixed because the order is determined by the structure of the planetary gear mechanism. Note that the order of rotational speed of the rotating elements is the same as the order of disposition in speed diagrams of each rotating element (see FIGS. 4 and 5, etc.). Here, the term "order of disposition in speed diagrams of each rotating element" refers to the order in which axes corresponding to the respective rotating elements in the speed diagrams are disposed in a direction orthogonal to the axes. The direction in which axes corresponding to the respective rotating elements are disposed in a speed diagram varies depending on how the speed diagram is drawn, but the order of disposition of the rotating elements is fixed because the order of disposition of the rotating elements is determined by the structure of the planetary gear mechanism.

As shown in FIG. 1, in the present embodiment, the first drive unit 100A includes a first gear G1 that rotates together with the first rotor Ro1 of the first rotating electrical machine MG1; and a second gear G2 that is drive-coupled to the first gear G1. In an example shown, the first gear G1 is drive-coupled to the second gear G2 through an idler gear IG. The idler gear IG meshes with each of the first gear G1 and the second gear G2.

In the present embodiment, the first gear G1 is disposed on the second axis X2. The first gear G1 is coupled to the first rotor Ro1 through a first rotor shaft RS1 extending in the axial direction L, so as to rotate together with the first rotor Ro1.

In the present embodiment, the second gear G2 is disposed on the first axis X1. The second gear G2 is disposed at a location which is on an outer side in the radial direction R of the first ring gear R1 of the distribution differential gear mechanism SP, and at which the second gear G2 overlaps the distribution differential gear mechanism SP as viewed radially in the radial direction R. Here, for disposition of two elements, "to overlap as viewed in a specific direction" indicates that when a virtual straight line parallel to the line-of-sight direction is moved in each direction orthogonal to the virtual straight line, a region in which the virtual straight line intersects both of the two elements is present in at least a part of the two elements.

In addition, in the present embodiment, the second gear G2 is coupled to the first ring gear R1 so as to rotate together with the first ring gear R1. In this example, a cylindrical gear forming member 2 whose center of axis is the first axis X1 is provided. The second gear G2 is formed on an outer circumferential surface of the gear forming member 2, and the first ring gear R1 is formed on an inner circumferential surface of the gear forming member 2.

The transmission TM includes a third engagement device CL3. The transmission TM changes the speed of rotation transmitted from the distribution differential gear mechanism SP at a transmission gear ratio determined based on a shift speed formed by the third engagement device CL3, and transmits the rotation to the first output member O1. Note that when the transmission gear ratio determined based on a shift speed formed by the third engagement device CL3 is 1, the transmission TM transmits rotation transmitted from the distribution differential gear mechanism SP as it is to the first output member O1. In the present embodiment, the third engagement device CL3 forms either one of a first shift speed (low shift speed) ST1 with a relatively high transmission gear ratio and a second shift speed (high shift speed) ST2 with a lower transmission gear ratio than the first shift speed ST1.

In the present embodiment, the transmission TM includes a third gear G3, a fourth gear G4, a fifth gear G5, a sixth gear G6, and a transmission output gear 3. In the present embodiment, the third gear G3 and the fourth gear G4 are disposed on the first axis X1. The fifth gear G5, the sixth gear G6, and the transmission output gear 3 are disposed on the third axis X3.

The third gear G3 is coupled to the first carrier C1 of the distribution differential gear mechanism SP so as to rotate together with the first carrier C1. In the present embodiment, the third gear G3 is disposed on an axial first side L1 of the distribution differential gear mechanism SP. In addition, in the present embodiment, the first rotating electrical machine MG1 is disposed at a location at which the first rotating electrical machine MG1 overlaps both of the third gear G3 and the distribution differential gear mechanism SP as viewed radially in the radial direction R.

The fourth gear G4 is coupled to the first ring gear R1 of the distribution differential gear mechanism SP so as to rotate together with the first ring gear R1. In the present embodiment, the fourth gear G4 is disposed at a location which is on the outer side in the radial direction R of the first ring gear R1 and at which the fourth gear G4 overlaps the distribution differential gear mechanism SP as viewed radially in the radial direction R. That is, in the present embodiment, the transmission TM and the distribution differential gear mechanism SP are disposed so as to overlap each other as viewed radially in the radial direction R. In the example shown, of the constituent members of the transmission TM, the fourth gear G4 and the sixth gear G6 overlap the distribution differential gear mechanism SP as viewed radially. In addition, the third engagement device CL3 also overlaps the distribution differential gear mechanism SP as viewed radially. In addition, in this example, the fourth gear G4 also functions as the second gear G2. In other words, the second gear G2 and the fourth gear G4 are formed as a single gear on the outer circumferential surface of the gear forming member 2. By this, compared with a configuration in which the second gear G2 and the fourth gear G4 are provided independently of each other, the manufacturing cost of the vehicle drive device 100 (first drive unit 100A) can be reduced.

The fifth gear G5 meshes with the third gear G3. The sixth gear G6 meshes with the fourth gear G4. In the present embodiment, the sixth gear G6 meshes with the fourth gear G4 at a location in a circumferential direction of the fourth gear G4 (second gear G2) that differs from the first gear G1. The transmission output gear 3 is formed so as to be rotatable relative to the fifth gear G5 and the sixth gear G6.

The number of teeth of the third gear G3 differs from the number of teeth of the fourth gear G4. That is, the outside diameter of the third gear G3 differs from the outside diameter of the fourth gear G4. As described above, the third gear G3 and the fourth gear G4 are disposed on the same axis, and the fifth gear G5 that meshes with the third gear G3 and the sixth gear G6 that meshes with the fourth gear G4 are disposed on the same axis. Hence, when the outside diameter of the third gear G3 is smaller than the outside diameter of the fourth gear G4, the outside diameter of the fifth gear G5 is larger than the outside diameter of the sixth gear G6. On the other hand, when the outside diameter of the third gear G3 is larger than the outside diameter of the fourth gear G4, the outside diameter of the fifth gear G5 is smaller than the outside diameter of the sixth gear G6. Thus, the gear ratio of the fifth gear G5 to the third gear G3 differs from the gear ratio of the sixth gear G6 to the fourth gear G4. In the present embodiment, the outside diameter of the third gear G3 is smaller than the outside diameter of the fourth gear G4, and the number of teeth of the third gear G3 is smaller than the number of teeth of the fourth gear G4. Hence, in the present embodiment, the outside diameter of the fifth gear G5 is larger than the outside diameter of the sixth gear G6, and the number of teeth of the fifth gear G5 is larger than the number of teeth of the sixth gear G6. Thus, the gear ratio of the fifth gear G5 to the third gear G3 is higher than the gear ratio of the sixth gear G6 to the fourth gear G4.

In the present embodiment, the third engagement device CL3 is configured to couple either one of the fifth gear G5 and the sixth gear G6 to the transmission output gear 3. As described above, in the present embodiment, the gear ratio of the fifth gear G5 to the third gear G3 is higher than the gear ratio of the sixth gear G6 to the fourth gear G4. Hence, when the third engagement device CL3 couples the fifth gear G5 to the transmission output gear 3, the first shift speed (low shift speed) ST1 with a higher transmission gear ratio than the second shift speed ST2 is formed. On the other hand, when the third engagement device CL3 couples the sixth gear G6 to the transmission output gear 3, the second shift speed (high shift speed) ST2 with a lower transmission gear ratio than the first shift speed ST1 is formed.

Furthermore, in the present embodiment, the third engagement device CL3 is configured to be able to switch to a neutral state in which neither the first shift speed ST1 nor the second shift speed ST2 is formed. When the third engagement device CL3 is in a neutral state, the transmission TM goes into a state in which rotation transmitted from the distribution differential gear mechanism SP is not transmitted to the first output member O1, i.e., a state in which drive power of both of the internal combustion engine EG and the first rotating electrical machine MG1 is not transmitted to the first wheels W1.

A state in which the third engagement device CL3 forms either one of the first shift speed ST1 and the second shift speed ST2 corresponds to an engaged state of the third engagement device CL3. On the other hand, the neutral state of the third engagement device CL3 corresponds to a disengaged state of the third engagement device CL3. In this example, the third engagement device CL3 is a mesh engagement device (dog clutch) configured to be able to switch between an engaged state and a disengaged state by an actuator such as a solenoid, a motor, or a hydraulic cylinder.

The first output differential gear mechanism DF1 is configured to distribute rotation of the first output member O1 to the pair of first wheels W 1. In the present embodiment, the first output member O1 is a first differential input gear 4 that meshes with the transmission output gear 3.

In the present embodiment, the first output differential gear mechanism DF1 is a bevel gear type differential gear mechanism. Specifically, the first output differential gear mechanism DF1 includes a first hollow differential case; a first pinion shaft supported so as to rotate together with the first differential case; a pair of first pinion gears rotatably supported on the first pinion shaft; and a pair of first side gears that mesh with the pair of first pinion gears to function as distribution output elements. The first differential case accommodates the first pinion shaft, the pair of first pinion gears, and the pair of first side gears. In the present embodiment, the first differential input gear 4 serving as the first output member O1 is coupled to the first differential case so as to protrude toward an outer side in the radial direction R of the first differential case. First driveshafts DS1 that are drive-coupled to the first wheels W1 are coupled to the pair of first side gears so that the first driveshafts DS1 and the pair of first side gears can rotate together. By this configuration, the first output differential gear mechanism DF1 distributes rotation of the first output member O1 (first differential input gear 4) to the pair of first wheels W 1 through a pair of the first driveshafts DS1.

The first engagement device CL1 is an engagement device that disengages and engages power transmission between the input member I and the first rotating element E1 of the distribution differential gear mechanism SP. In the present embodiment, the first engagement device CL1 is configured to disengage and engage power transmission between the input member I and the first sun gear S1. In this example, the first engagement device CL1 is a friction engagement device including a pair of friction members, and the state of engagement between the pair of friction members is controlled by hydraulic pressure. By this, with the first engagement device CL1 being in a slip-engaged state, the transmission torque capacity of the first engagement device CL1 can be controlled. Thus, when the internal combustion engine EG is allowed to start using drive power of the first rotating electrical machine MG1, torque transmitted from the first rotating electrical machine MG1 to the internal combustion engine EG can be controlled, and thus, there is no need to temporarily stop the first rotating electrical machine MG1. Here, the term "slip-engaged state" is an engaged state in which there is a rotational speed difference (slippage) between the pair of friction members of the friction engagement device.

The second engagement device CL2 is an engagement device that disengages and engages power transmission between two rotating elements selected from among the three rotating elements, the first rotating element E1, the second rotating element E2, and the third rotating element E3, of the distribution differential gear mechanism SP.

In the present embodiment, the second engagement device CL2 is configured to disengage and engage power transmission between the first carrier C1 serving as the second rotating element E2 and the first ring gear R1 serving as the third rotating element E3. The second engagement device CL2 is disposed between the first engagement device CL1 and the distribution differential gear mechanism SP in the axial direction L. In this example, the second engagement device CL2 is a mesh engagement device (dog clutch) configured to be able to switch between an engaged state and a disengaged state by an actuator such as a solenoid, a motor, or a hydraulic cylinder.

As shown in FIG. 1, the second rotating electrical machine MG2 functions as a drive power source of the second wheels W2. The second rotating electrical machine MG2 has a function of a motor that generates power by receiving supply of electric power, and a function of a generator that generates electric power by receiving supply of power. Specifically, the second rotating electrical machine MG2 is electrically connected to the above-described electrical storage device BT. The second rotating electrical machine MG2 generates drive power by performing motoring by electric power stored in the electrical storage device BT. In addition, during regeneration, the second rotating electrical machine MG2 generates electric power by drive power transmitted from a second output member O2 side, to charge the electrical storage device BT.

The second stator St2 of the second rotating electrical machine MG2 is fixed to a non-rotating member (e.g., a case that accommodates the second rotating electrical machine MG2, etc.). The second rotor Ro2 of the second rotating electrical machine MG2 is rotatably supported by the second stator St2. In the present embodiment, the second rotor Ro2 is disposed on an inner side in the radial direction R of the second stator St2.

In the present embodiment, the second drive unit 100B includes a rotor gear 5 that rotates together with the second rotor Ro2. The rotor gear 5 is disposed on the fifth axis X5. The rotor gear 5 is coupled to the second rotor Ro2 through a second rotor shaft RS2 extending in the axial direction L, so as to rotate together with the second rotor Ro2.

The counter gear mechanism CG includes a counter input gear 61, a counter output gear 62, and a countershaft 63 that couples the gears 61 and 62 together so that the gears 61 and 62 rotate together.

The counter input gear 61 is an input element of the counter gear mechanism CG. The counter input gear 61 meshes with the rotor gear 5.

The counter output gear 62 is an output element of the counter gear mechanism CG. In the present embodiment, the counter output gear 62 is disposed more to the axial second side L2 than the counter input gear 61. In addition, in the present embodiment, the counter output gear 62 is formed to be smaller in diameter than the counter input gear 61.

The second output differential gear mechanism DF2 is configured to distribute rotation of the second output member O2 to the pair of second wheels W2. In the present embodiment, the second output member O2 is a second differential input gear 7 that meshes with the counter output gear 62 of the counter gear mechanism CG.

In the present embodiment, the second output differential gear mechanism DF2 is a bevel gear type differential gear mechanism. Specifically, the second output differential gear mechanism DF2 includes a second hollow differential case; a second pinion shaft supported so as to rotate together with the second differential case; a pair of second pinion gears rotatably supported on the second pinion shaft; and a pair of second side gears that mesh with the pair of second pinion gears to function as distribution output elements. The second differential case accommodates the second pinion shaft, the pair of second pinion gears, and the pair of second side gears. In the present embodiment, the second differential input gear 7 serving as the second output member O2 is coupled to the second differential case so as to protrude toward an outer side in the radial direction R of the second differential case. Second driveshafts DS2 that are drive-coupled to the second wheels W2 are coupled to the pair of second side gears so that the second driveshafts DS2 and the pair of second side gears can rotate together. By this configuration, the second output differential gear mechanism DF2 distributes rotation of the second output member O2 (second differential input gear 7) to the pair of second wheels W2 through a pair of the second driveshafts DS2.

As shown in FIG. 2, the vehicle drive device 100 includes a control device 10 that controls the first rotating electrical machine MG1, the second rotating electrical machine MG2, the internal combustion engine EG, the first engagement device CL1, and the second engagement device CL2. In the present embodiment, the control device 10 includes a main control part 11; an internal combustion engine control part 12 that controls the internal combustion engine EG; a first rotating electrical machine control part 13 that controls the first rotating electrical machine MG1; a second rotating electrical machine control part 14 that controls the second rotating electrical machine MG2; and an engagement control part 15 that controls the states of engagement of the first engagement device CL1, the second engagement device CL2, and the third engagement device CL3.

The main control part 11 outputs to each of the internal combustion engine control part 12, the first rotating electrical machine control part 13, the second rotating electrical machine control part 14, and the engagement control part 15 an instruction for controlling a device handled by the control part. The internal combustion engine control part 12 controls the internal combustion engine EG such that the internal combustion engine EG outputs target torque instructed by the main control part 11 or achieves a target rotational speed instructed by the main control part 11. The first rotating electrical machine control part 13 controls the first rotating electrical machine MG1 such that the first rotating electrical machine MG1 outputs target torque instructed by the main control part 11 or achieves a target rotational speed instructed by the main control part 11. The second rotating electrical machine control part 14 controls the second rotating electrical machine MG2 such that the second rotating electrical machine MG2 outputs target torque instructed by the main control part 11 or achieves a target rotational speed instructed by the main control part 11. The engagement control part 15 controls actuators (depiction is omitted) for allowing the first engagement device CL1, the second engagement device CL2, and the third engagement device CL3 to operate, such that each of the first engagement device CL1, the second engagement device CL2, and the third engagement device CL3 goes into a state of engagement instructed by the main control part 11.

In addition, the main control part 11 is configured to be able to obtain information from sensors provided in each part of a vehicle having the vehicle drive device 100 mounted thereon, so as to obtain information on each part of the vehicle. In the present embodiment, the main control part 11 is configured to be able to obtain information from a SOC sensor Se1, a vehicle speed sensor Se2, an amount-of-accelerator-operation sensor Se3, an amount-of-brake-operation sensor Se4, and a shifter position sensor Se5.

The SOC sensor Se1 is a sensor for detecting a state of the electrical storage device BT that is electrically connected to the first rotating electrical machine MG1 and the second rotating electrical machine MG2. The SOC sensor Se1 includes, for example, a voltage sensor, a current sensor, etc. The main control part 11 calculates a state of charge (SOC) of the electrical storage device BT, based on information on a voltage value, a current value, etc., outputted from the SOC sensor Se1.

The vehicle speed sensor Se2 is a sensor for detecting a travel speed of the vehicle having the vehicle drive device 100 mounted thereon. In the present embodiment, the vehicle speed sensor Se2 is a sensor for detecting a rotational speed of the first output member O1. The main control part 11 calculates a rotational speed (angular speed) of the first output member O1, based on information on the rotational speed outputted from the vehicle speed sensor Se2. Since the rotational speed of the first output member O1 is proportional to vehicle speed, the main control part 11 calculates vehicle speed based on a detection signal of the vehicle speed sensor Se2.

The amount-of-accelerator-operation sensor Se3 is a sensor for detecting the amount of driver's operation on an accelerator pedal provided in the vehicle having the vehicle drive device 100 mounted thereon. The main control part 11 calculates the amount of driver's operation on the accelerator pedal, based on a detection signal of the amount-of-accelerator-operation sensor Se3.

The amount-of-brake-operation sensor Se4 is a sensor for detecting the amount of driver's operation on a brake pedal provided in the vehicle having the vehicle drive device 100 mounted thereon. The main control part 11 calculates the amount of driver's operation on the brake pedal, based on a detection signal of the amount-of-brake-operation sensor Se4.

The shifter position sensor Se5 is a sensor for detecting a selected position of a shifter (shifter position) that is operated by the driver of the vehicle having the vehicle drive device 100 mounted thereon. The main control part 11 calculates a shifter position based on a detection signal of the shifter position sensor Se5. The shifter is configured to be able to select a parking range (P-range), a reverse travel range (R-range), a neutral range (N-range), a forward travel range (D-range), etc.

The main control part 11 selects a plurality of operating modes of the vehicle drive device 100 which will be described later, based on information from the above-described sensors Se1 to Se5. The main control part 11 controls, through the engagement control part 15, each of the first engagement device CL1, the second engagement device CL2, and the third engagement device CL3 to a state of engagement determined based on a selected operating mode, thereby switching to the selected operating mode. Furthermore, the main control part 11 performs, through the internal combustion engine control part 12, the first rotating electrical machine control part 13, and the second rotating electrical machine control part 14, cooperative control of operating states of the internal combustion engine EG, the first rotating electrical machine MG1, and the second rotating electrical machine MG2, thereby enabling the vehicle to perform appropriate travel based on the selected operating mode.

As shown in FIG. 3, in the present embodiment, the vehicle drive device 100 has, as operating modes, an electrical torque converter mode (hereinafter, referred to as "eTC mode"), a first EV mode, a second EV mode, a first HV mode, a second HV mode, and a charge mode.

FIG. 3 shows the states of the first engagement device CL1, the second engagement device CL2, and the third engagement device CL3 in each operating mode of the vehicle drive device 100 of the present embodiment. Note that in the fields of the first engagement device CL1 and the second engagement device CL2 of FIG. 3, "∘" indicates that a target engagement device is in an engaged state and "×" indicates that a target engagement device is in a disengaged state. In addition, in the field of the third engagement device CL3 of FIG. 3, "Lo" indicates that the third engagement device CL3 forms the first shift speed (low shift speed) ST1, "Hi" indicates that the third engagement device CL3 forms the second shift speed (high shift speed) ST2, and "N" indicates that the third engagement device CL3 is in a neutral state.

The eTC mode is a mode in which a combination of drive power of the first rotating electrical machine MG1 and drive power of the internal combustion engine EG is outputted to the first output member O1 from the second rotating element E2 through the distribution differential gear mechanism SP. This mode can amplify torque of the internal combustion engine EG and transmit the amplified torque to the first output member O1, and thus is referred to as so-called electrical torque converter mode.

As shown in FIG. 3, in the eTC mode, control is performed such that the first engagement device CL1 is in an engaged state, the second engagement device CL2 is in a disengaged state, and the third engagement device CL3 is in a state of forming the first shift speed (low shift speed) ST1. That is, in the eTC mode, the first engagement device CL1 is brought into an engaged state and the second engagement device CL2 is brought into a disengaged state. In addition, in the eTC mode of the present embodiment, the third engagement device CL3 is brought into an engaged state. The eTC mode corresponds to a "first mode".

In the eTC mode of the present embodiment, the distribution differential gear mechanism SP combines together torque of the first rotating electrical machine MG1 and torque of the internal combustion engine EG and outputs torque higher than the torque of the internal combustion engine EG from the first carrier C 1. Then, the transmission TM changes the speed of rotation of the first carrier C1 at a transmission gear ratio determined based on the first shift speed ST1, and transmits the rotation to the transmission output gear 3 (see FIG. 4).

In the first EV mode, control is performed such that the first engagement device CL1 is in a disengaged state, the second engagement device CL2 is in an engaged state, and the third engagement device CL3 is in a state of forming the first shift speed (low shift speed) ST1. On the other hand, in the second EV mode, control is performed such that the first engagement device CL1 is in a disengaged state, the second engagement device CL2 is in an engaged state, and the third engagement device CL3 is in a state of forming the second shift speed (high shift speed) ST2. That is, in the first EV mode and the second EV mode, the first engagement device CL1 is brought into a disengaged state and both of the second engagement device CL2 and the third engagement device CL3 are brought into an engaged state. Hence, the first EV mode and the second EV mode provide a state in which power transmission between the internal combustion engine EG and the first wheels W1 is cut off, and a state in which power transmission between the first rotating electrical machine MG1 and the first wheels W1 is performed. The first EV mode and the second EV mode correspond to a "second mode".

In the first EV mode and the second EV mode, the first engagement device CL1 is brought into a disengaged state, by which the internal combustion engine EG is decoupled from the distribution differential gear mechanism SP, and the second engagement device CL2 is brought into an engaged state, by which the three rotating elements E1 to E3 of the distribution differential gear mechanism SP go into a state of rotating together. As a result, in the present embodiment, rotation of the first rotating electrical machine MG1 transmitted to the second gear G2 from the first gear G1 is transmitted as it is to the third gear G3 and the fourth gear G4 of the transmission TM. Then, according to the state of the third engagement device CL3, the speed of the rotation transmitted to the transmission TM is changed at the transmission gear ratio of the first shift speed ST1 in the first EV mode and changed at the transmission gear ratio of the second shift speed ST2 in the second EV mode, and the rotation is transmitted to the transmission output gear 3 (see FIG. 5).

In the first HV mode, control is performed such that both of the first engagement device CL1 and the second engagement device CL2 are in an engaged state, and the third engagement device CL3 is in a state of forming the first shift speed (low shift speed) ST1. On the other hand, in the second HV mode, control is performed such that both of the first engagement device CL1 and the second engagement device CL2 are in an engaged state, and the third engagement device CL3 is in a state of forming the second shift speed (high shift speed) ST2. That is, in the first HV mode and the second HV mode, all of the first engagement device CL1, the second engagement device CL2, and the third engagement device CL3 are brought into an engaged state. Hence, the first HV mode and the second HV mode provide a state in which power transmission between both of the internal combustion engine EG and the first rotating electrical machine MG1 and the first wheels W1 is performed. The first HV mode and the second HV mode correspond to a "third mode".

In the first HV mode and the second HV mode, the first engagement device CL1 is brought into an engaged state, by which the internal combustion engine EG is coupled to the distribution differential gear mechanism SP, and the second engagement device CL2 is brought into an engaged state, by which the three rotating elements E1 to E3 of the distribution differential gear mechanism SP go into a state of rotating together. As a result, in the present embodiment, rotation of the internal combustion engine EG transmitted through the input member I and rotation of the first rotating electrical machine MG1 transmitted to the second gear G2 from the first gear G1 are transmitted as they are to the third gear G3 and the fourth gear G4 of the transmission TM. Then, according to the state of the third engagement device CL3, the speed of the rotation transmitted to the transmission TM is changed at the transmission gear ratio of the first shift speed ST1 in the first HV mode and changed at the transmission gear ratio of the second shift speed ST2 in the second HV mode, and the rotation is transmitted to the transmission output gear 3 (see FIG. 5).

In the charge mode, control is performed such that both of the first engagement device CL1 and the second engagement device CL2 are in an engaged state, and the third engagement device CL3 is in a neutral state. That is, in the charge mode, both of the first engagement device CL1 and the second engagement device CL2 are brought into an engaged state, and the third engagement device CL3 is brought into a disengaged state. Hence, the charge mode provides a state in which power transmission between the internal combustion engine EG and the first rotating electrical machine MG1 is performed, and a state in which power transmission between both of the internal combustion engine EG and the first rotating electrical machine MG1 and the first wheels W 1 is cut off and the first rotating electrical machine MG1 generates electric power by drive power transmitted from the internal combustion engine EG.

Note that in the charge mode, the vehicle may be stopped, or the vehicle may travel by allowing the second rotating electrical machine MG2 to perform motoring by electric power generated by the first rotating electrical machine MG1 or electric power stored in the electrical storage device BT, to transmit drive power of the second rotating electrical machine MG2 to the second wheels W2. A mode in which the vehicle thus travels by drive power of the second rotating electrical machine MG2 while the charge mode is set is referred to as so-called series hybrid mode.

FIG. 4 shows a speed diagram of the distribution differential gear mechanism SP and the transmission TM in the eTC mode of the present embodiment. In the speed diagram of FIG. 4, a vertical axis corresponds to the rotational speed of each rotating element of the distribution differential gear mechanism SP and the transmission TM. Each of a plurality of vertical lines disposed parallel to each other corresponds to each rotating element of the distribution differential gear mechanism SP and the transmission TM. In addition, in the speed diagram of FIG. 4, reference signs shown above the plurality of vertical lines are the reference signs of corresponding rotating elements. Reference signs shown below a plurality of vertical lines are the reference signs of elements that are drive-coupled to rotating elements corresponding to reference signs shown above. Such a method of drawing a speed diagram is also the same for FIG. 5.

As shown in FIG. 4, in the eTC mode of the present embodiment, the internal combustion engine EG outputs a positive torque while positively rotating, and the first rotating electrical machine MG1 outputs a positive torque while negatively rotating and generates electric power. By this, torque higher than the torque of the internal combustion engine EG is transmitted to the first carrier C1 of the distribution differential gear mechanism SP. Rotation of the first carrier C1 rotated by the torque is transmitted to the third gear G3 of the transmission TM. Then, rotation whose speed is reduced at a transmission gear ratio determined based on the first shift speed ST1 between the third gear G3 and the fifth gear G5 is transmitted to the transmission output gear 3.

FIG. 5 shows a speed diagram of the distribution differential gear mechanism SP and the transmission TM in the first EV mode and the second EV mode and in the first HV mode and the second HV mode of the present embodiment.

As shown in FIG. 5, in the first EV mode and the second EV mode and in the first HV mode and the second HV mode of the present embodiment, the second engagement device CL2 is brought into an engaged state, by which the three rotating elements E1 to E3 of the distribution differential gear mechanism SP go into a state of rotating together. To the three rotating elements E1 to E3 of the distribution differential gear mechanism SP that thus rotate together there are transmitted torque of the first rotating electrical machine MG1 in the first EV mode and the second EV mode, and torque of both of the internal combustion engine EG and the first rotating electrical machine MG1 in the first HV mode and the second HV mode. Of the three rotating elements E1 to E3 of the distribution differential gear mechanism SP rotated by the torque, rotation outputted from the first carrier C1 which is the second rotating element E2 is transmitted to the third gear G3 of the transmission TM. On the other hand, rotation outputted from the first ring gear R1 which is the third rotating element E3 is transmitted to the fourth gear G4 of the transmission TM. Then, in the first EV mode and the first HV mode, rotation whose speed is reduced at a transmission gear ratio determined based on the first shift speed ST1 between the third gear G3 and the fifth gear G5 is transmitted to the transmission output gear 3. On the other hand, in the second EV mode and the second HV mode, rotation whose speed is reduced at a transmission gear ratio determined based on the second shift speed ST2 between the fourth gear G4 and the sixth gear G6 is transmitted to the transmission output gear 3.

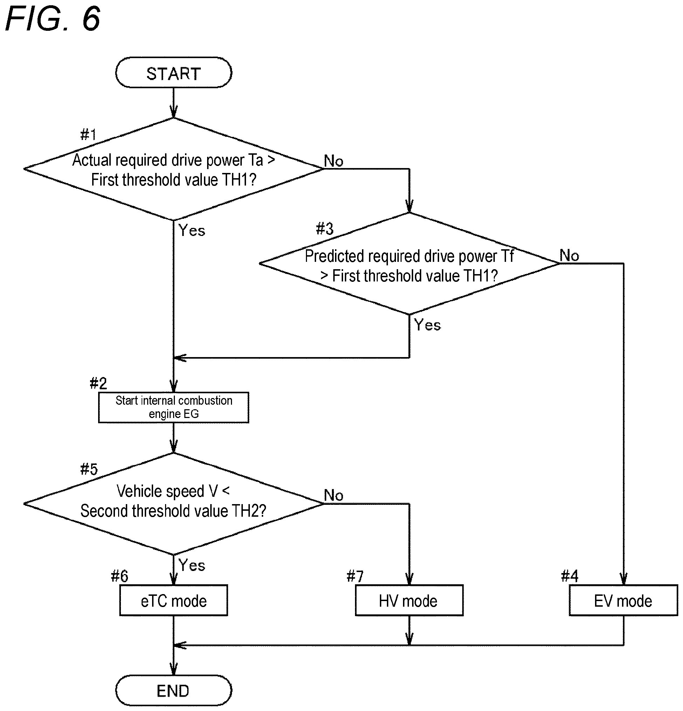

A control process performed by the control device 10 will be described below. FIG. 6 is a flowchart showing an example of a control process performed by the control device 10. Note that it is assumed that the control process shown in FIG. 6 starts from a state in which the internal combustion engine EG is stopped.

As shown in FIG. 6, the control device 10 determines whether actual required drive power Ta is greater than a first threshold value TH1 (step #1). The actual required drive power Ta is drive power that is currently required for the vehicle, and is more specifically drive power that is currently required to transmit to the pair of first wheels W1 and the pair of second wheels W2. The first threshold value TH1 is a threshold value set within a range of drive power that can be outputted in the second mode (here, the first EV mode and the second EV mode). For the first threshold value TH1, for example, maximum drive power can be set that can be outputted from both of the first rotating electrical machine MG1 and the second rotating electrical machine MG2 in the first EV mode or the second EV mode. Here, the first EV mode or the second EV mode is selected based on vehicle speed V which is the travel speed of the vehicle and the actual required drive power Ta, and maximum drive power that can be outputted from the first rotating electrical machine MG1 and the second rotating electrical machine MG2 in the first EV mode or the second EV mode also changes depending on the vehicle speed V Thus, the first threshold value TH1 is set to a value that changes depending on the vehicle speed V. That is, the first threshold value TH1 is set to a value that decreases as the vehicle speed V increases. For example, the first threshold value TH1 can be set to a value that is the higher one of maximum drive power in the first EV mode and maximum drive power in the second EV mode at each vehicle speed V. In the present embodiment, the main control part 11 calculates actual required drive power Ta based on information from the amount-of-accelerator-operation sensor Se3 and the amount-of-brake-operation sensor Se4, and determines whether the actual required drive power Ta is greater than the first threshold value TH1.

If the control device 10 determines that the actual required drive power Ta is greater than the first threshold value TH1 (step #1: Yes), then the control device 10 allows the internal combustion engine EG to start (step #2). In the present embodiment, the engagement control part 15 brings the first engagement device CL1 into an engaged state, and the first rotating electrical machine control part 13 allows the first rotating electrical machine MG1 to be driven such that the first rotating electrical machine MG1 outputs torque transmitted to the internal combustion engine EG through the first engagement device CL1 having been brought into the engaged state (when torque is already outputted, the torque transmitted to the internal combustion engine EG is outputted in addition to the torque). In this manner, using drive power of the first rotating electrical machine MG1, the internal combustion engine EG is allowed to start.

On the other hand, if the control device 10 determines that the actual required drive power Ta is less than or equal to the first threshold value TH1 (step #1: No), then the control device 10 determines whether predicted required drive power Tf which is drive power predicted to be required for the vehicle is greater than the first threshold value TH1, based on at least one of the setting state and travel state of the vehicle (step #3).

In the present embodiment, the setting state of the vehicle includes a normal output setting that outputs normal drive power; and a high output setting that outputs higher drive power than the normal output setting. When the setting state of the vehicle is the high output setting, the control device 10 determines that the predicted required drive power Tf is greater than the first threshold value TH1. Note that switching between the normal output setting and the high output setting can be implemented by, for example, the driver operating the shifter. In this case, the main control part 11 can determine the setting state of the vehicle, based on information from the shifter position sensor Se5. Alternatively, switching between the normal output setting and the high output setting can also be implemented by, for example, the driver operating a mode switching switch. Note that the high output setting includes, for example, a sport driving mode and a tow/haul mode, and the normal output setting includes, for example, a fuel economy priority mode and a comfort mode.

In addition, in the present embodiment, information indicating the travel state of the vehicle includes a travel road gradient which is a gradient of a portion of a road on which the vehicle is currently traveling, the portion being located ahead in a traveling direction; a towing weight which is the weight of a towing target for a case of the vehicle towing; and the amount of wheel slip which is the amount of slip of wheels relative to the ground. The control device 10 determines that the predicted required drive power Tf is greater than the first threshold value TH1, on condition that at least one of the following cases is satisfied: a case in which the travel road gradient is greater than a defined gradient threshold value; a case in which the towing weight is greater than a defined towing threshold value; and a case in which the amount of wheel slip is greater than a defined slip threshold value.

Here, the travel road gradient can be represented by an angle or a percentage, with an upward gradient being positive and a downward gradient being negative. When the upward gradient is large, actual required drive power Ta required to maintain vehicle speed V is expected to be high. Thus, the gradient threshold value is set to a positive value that is, for example, a value of a travel road gradient at which the actual required drive power Ta required to maintain vehicle speed V has a value corresponding to the first threshold value TH1. Note that the travel road gradient can be calculated based on road information in a navigation system mounted on the vehicle, an image shot with a camera mounted on the vehicle, a measurement result obtained by an acceleration sensor mounted on the vehicle, etc.

In addition, the towing weight can be represented by the weight of a towing object for a case of the vehicle towing the towing object. When the towing weight is large, actual required drive power Ta for allowing the vehicle to accelerate is expected to be high. Thus, the towing threshold value is set to, for example, a value of towing weight at which the actual required drive power Ta for allowing the vehicle to perform required acceleration has a value corresponding to the first threshold value TH1. Such a towing weight can be calculated based on information from the vehicle speed sensor Se2 and the amount-of-accelerator-operation sensor Se3, etc. In addition, for example, the towing weight can also be represented simply by whether there is a towing object. In this case, when there is a towing object, it may be determined that the towing weight is greater than the towing threshold value, and when there is no towing object, it may be determined that the towing weight is smaller than the towing threshold value. Such a determination as to whether there is a towing object can be made from a signal indicating connection or no connection of a towing device, etc.

In addition, the amount of wheel slip can be represented by a difference between the rotational speed of the first wheels W 1 based on vehicle speed V and the actual rotational speed of the first wheels W1. In general, there is a tendency that the amount of wheel slip increases when the vehicle is traveling on a bad road such as a slippery road surface or a road surface with many bumps, and it is expected that during traveling on such a road surface, the actual required drive power Ta may increase so that the vehicle is appropriately controlled. Thus, the amount of wheel slip is set to, for example, a value of the amount of wheel slip at which the actual required drive power Ta required to appropriately travel on a bad road has a value corresponding to the first threshold value TH1. Such an amount of wheel slip can be calculated based on information from the vehicle speed sensor Se2 that detects the rotational speeds of the first output member O1 and the first wheels W1 and an acceleration sensor (depiction is omitted) that detects acceleration of the vehicle, etc.

If the control device 10 determines that the predicted required drive power Tf is greater than the first threshold value TH1 (step #3: Yes), then the control device 10 allows the internal combustion engine EG to start (step #2). On the other hand, if the control device 10 determines that the predicted required drive power Tf is less than or equal to the first threshold value TH1 (step #3: No), then the control device 10 sets the operating mode to the first EV mode or the second EV mode (step #4). That is, when the current operating mode is the first EV mode or the second EV mode, the mode is maintained. In the present embodiment, the engagement control part 15 brings the first engagement device CL1 into a disengaged state, brings the second engagement device CL2 into an engaged state, and brings the third engagement device CL3 into a state of forming the first shift speed ST1 or the second shift speed ST2. Furthermore, the control device 10 controls the first rotating electrical machine MG1 to output the actual required drive power Ta. Note that in the first EV mode or the second EV mode, the second rotating electrical machine MG2 may be driven or may be stopped.

After the control device 10 allows the internal combustion engine EG to start at step #2, the control device 10 determines whether the vehicle speed V is less than a second threshold value TH2 (step #5). In the present embodiment, the second threshold value TH2 is set so as to correspond to vehicle speed V at which the rotational speed of the internal combustion engine EG achieves an idling rotational speed when both of the first engagement device CL1 and the second engagement device CL2 are in an engaged state. By thus setting the second threshold value TH2 and not selecting the first HV mode and the second HV mode when the vehicle speed V is less than the second threshold value TH2, in a case of vehicle speed V at which the internal combustion engine EG stalls when the first HV mode or the second HV mode is set, the first HV mode and the second HV mode can be prevented from being selected.

If the control device 10 determines that the vehicle speed V is less than the second threshold value TH2 (step #5: Yes), the control device 10 sets the operating mode to the eTC mode (step #6). In the present embodiment, the engagement control part 15 brings the first engagement device CL1 into an engaged state, brings the second engagement device CL2 into a disengaged state, and brings the third engagement device CL3 into a state of forming the first shift speed ST1. Furthermore, the control device 10 controls the first rotating electrical machine MG1 and the internal combustion engine EG to output the actual required drive power Ta. The eTC mode is a mode in which compared with the first HV mode and the second HV mode, high drive power can be obtained at a low vehicle speed V Thus, even at a low vehicle speed V at which the internal combustion engine EG stalls in the first HV mode and the second HV mode, a state in which required drive power can be appropriately and promptly outputted can be provided. Note that in the eTC mode, the second rotating electrical machine MG2 may be driven or may be stopped.

On the other hand, if the control device 10 determines that the vehicle speed V is greater than or equal to the second threshold value TH2 (step #5: No), the control device 10 sets the operating mode to the first HV mode or the second HV mode (step #7). In the present embodiment, the engagement control part 15 brings both of the first engagement device CL1 and the second engagement device CL2 into an engaged state, and brings the third engagement device CL3 into a state of forming the first shift speed ST1 or the second shift speed ST2. Furthermore, the control device 10 controls the first rotating electrical machine MG1 and the internal combustion engine EG to output the actual required drive power Ta. In the first HV mode or the second HV mode, the second engagement device CL2 is brought into an engaged state to transmit drive power of the first rotating electrical machine MG1 and the internal combustion engine EG to the first output member O1 through the distribution differential gear mechanism SP whose three rotating elements E1 to E3 are in a state of rotating together, and thus, energy efficiency is more easily increased over the eTC mode. Thus, when the vehicle speed V is relatively high, while the energy efficiency of the vehicle drive device 100 is increased, a state in which required drive power can be promptly outputted can be provided. Note that in the first HV mode or the second HV mode, the second rotating electrical machine MG2 may be driven or may be stopped.

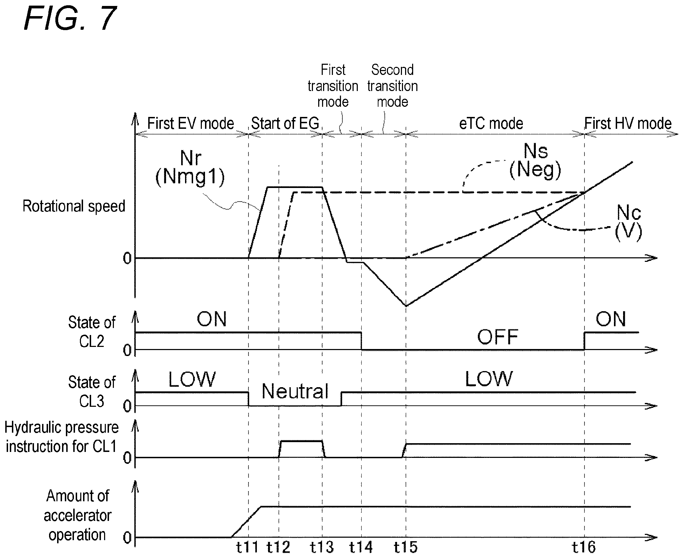

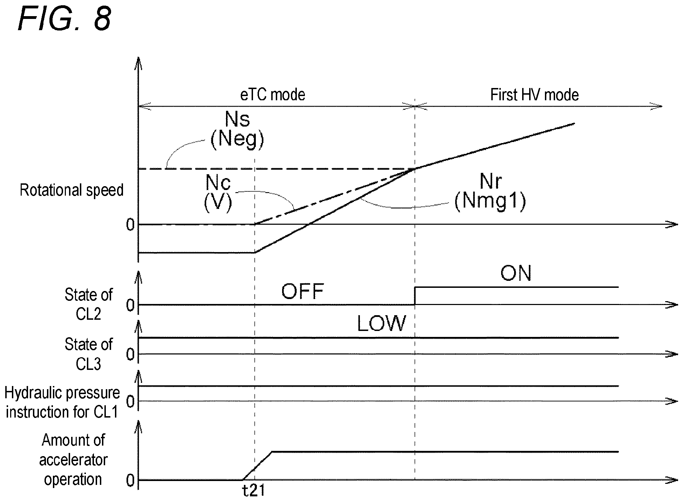

FIGS. 7 and 8 are time charts for a case in which the vehicle being stopped in the first EV mode starts to move in the eTC mode. FIG. 7 is a time chart showing an example of a conventional control process, and FIG. 8 is a time chart showing an example of control performed when it is determined in a control process performed by the control device 10 according to the present embodiment that predicted required drive power Tf is greater than the first threshold value TH1. Here, in FIGS. 7 and 8, "Ns", "Nc", and "Nr" respectively represent the rotational speed Neg of the internal combustion engine EG (output shaft Eo) that is converted into the rotational speed of the first sun gear S1, the rotational speed (vehicle speed V) of the first output member O1 that is converted into the rotational speed of the first carrier C 1, and the rotational speed Nmg1 of the first rotating electrical machine MG1 (first rotor Ro1) that is converted into the rotational speed of the first ring gear R1.

As shown in FIG. 7, in the conventional control process, before time t11, the first engagement device CL1 is in a disengaged state, the second engagement device CL2 is in an engaged state, and the third engagement device CL3 is in a state of forming the first shift speed (low shift speed) ST1, and the operating mode is the first EV mode. The vehicle is in a stopped state (V = 0).

Thereafter, the accelerator pedal is operated by the driver, requiring high drive power, and thus, in order to switch the operating mode from the first EV mode to the eTC mode, control to allow the internal combustion engine EG to start is performed from time t11. In this example, at time t11, the third engagement device CL3 is brought into a neutral state, and along with the driver's operation on the accelerator pedal, the rotational speed Nr of the first ring gear R1 is increased by drive power of the first rotating electrical machine MG1. Then, from time t12, the first engagement device CL1 is brought into an engaged state, by which the internal combustion engine EG starts by drive power of the first rotating electrical machine MG1.

After the start of the internal combustion engine EG, to maintain the stop of the vehicle even when the third engagement device CL3 is brought into an engaged state (a state of forming the first shift speed ST1), at time 13, the first engagement device CL1 is brought into a disengaged state and the first rotating electrical machine MG1 is controlled to reduce the rotational speed Nr of the first ring gear R1 to approach zero (first transition mode).

Then, at time 14, the second engagement device CL2 is brought into a disengaged state to bring the three rotating elements E1 to E3 of the distribution differential gear mechanism SP into a relatively rotatable state, and then the first rotating electrical machine MG1 is controlled to further reduce the rotational speed Nr of the first ring gear R1 (second transition mode). By this, with the rotational speed Nc of the first carrier C1 maintained at zero because the vehicle is being stopped and the third engagement device CL3 is in an engaged state, the rotational speed Ns of the first sun gear S1 can approach the rotational speed Neg of the internal combustion engine EG.

Subsequently, at time t15, with the rotational speed Ns of the first sun gear S1 approaching the rotational speed Neg of the internal combustion engine EG, the first engagement device CL1 is brought into an engaged state, by which the operating mode is switched to the eTC mode. Thereafter, the first rotating electrical machine MG1 is controlled to increase the rotational speed Nr of the first ring gear R1, by which the vehicle speed V gradually increases. Note that in the example shown, while the vehicle speed V increases in the eTC mode, the rotational speed Neg of the internal combustion engine EG (the rotational speed Ns of the first sun gear S 1) is maintained constant. Then, when the rotational speeds Nc, Nr, and Ns match at time t16, the second engagement device CL2 is brought into an engaged state to switch the operating mode to the first HV mode.

As such, in the conventional control process, during a period from when high drive power is requested at time t11 until the operating mode is switched to the eTC mode at time t15, a mode transition needs to be performed with the first transition mode and the second transition mode involved. Hence, it requires a lot of time before drive power can be outputted to the first output member O1 in the eTC mode after high drive power is requested.

On the other hand, in the control process performed by the control device 10 according to the present embodiment, when it is determined that the predicted required drive power Tf is greater than the first threshold value TH1, as shown in FIG. 8, before high drive power is actually requested at time t21, performance of the same control as control performed during a period of time t11 to t15 in the conventional control process is completed. That is, before the actual required drive power Ta increases, the eTC mode is set. Hence, after high drive power is actually requested at time t21, in the eTC mode, drive power corresponding to the required drive power can be promptly outputted to the first output member O1.

### [Other embodiments]

(1) In the above-described embodiment, as an example, a configuration is described in which as operating modes, there are provided the eTC mode, EV modes (the first EV mode and the second EV mode), HV modes (the first HV mode and the second HV mode), and the charge mode. However, the configuration is not limited thereto, and as operating modes, at least the eTC mode and the EV modes may be provided. Thus, a configuration may be adopted in which the HV modes are not provided, or the charge mode is not provided, or both of the HV modes and the charge mode are not provided.
(2) In the above-described embodiment, as an example, a configuration is described in which the vehicle drive device 100 includes the first drive unit 100A and the second drive unit 100B. However, the configuration is not limited thereto, and a configuration may be adopted in which the vehicle drive device 100 includes the first drive unit 100A and does not include the second drive unit 100B. In addition, the first drive unit 100A may include the second rotating electrical machine MG2. In this case, the second rotating electrical machine MG2 is drive-coupled so that drive power can be transmitted to any of rotating elements provided more to a first wheel W1 side than the transmission TM in the first drive unit 100A. Alternatively, a configuration in which the vehicle drive device 100 does not include the second rotating electrical machine MG2 may be adopted.
(3) In the above-described embodiment, as an example, a configuration is described in which the first drive unit 100A has, as the EV modes, the first EV mode and the second EV mode that have different transmission gear ratios of the transmission TM, but the EV mode may be a single mode with only one transmission gear ratio. Likewise, in the above-described embodiment, as an example, a configuration is described in which the first drive unit 100A has, as the HV modes, the first HV mode and the second HV mode that have different transmission gear ratios of the transmission TM, but the HV mode may be a single mode with only one transmission gear ratio. When the EV mode and the HV mode each are only one mode, the transmission TM (third engagement device CL3) is configured to implement one shift speed and a neutral state (a state in which power transmission is cut off).
(4) In the above-described embodiment, as an example, a case in which the distribution differential gear mechanism SP is a single-pinion planetary gear mechanism is described, but the configuration is not limited thereto. For example, the distribution differential gear mechanism SP may include a double-pinion planetary gear mechanism. Alternatively, the distribution differential gear mechanism SP may include other differential gear devices such as a configuration in which a plurality of bevel gears are combined together.
(5) In the above-described embodiment, as an example, a configuration is described in which the first engagement device CL1 is a friction engagement device and each of the second engagement device CL2 and the third engagement device CL3 is a mesh engagement device. However, the configuration is not limited thereto, and for example, the first engagement device CL1 may be a mesh engagement device. In addition, at least one of the second engagement device CL2 and the third engagement device CL3 may be a friction engagement device.
(6) Note that a configuration disclosed in each of the above-described embodiments can also be applied in combination with configurations disclosed in other embodiments as long as a contradiction does not arise. For other configurations, too, the embodiments disclosed in this specification are in all respects merely illustrative. Thus, various modifications can be made therein as appropriate without departing from the true spirit and scope of the present disclosure.

### [Summary of the above-described embodiments]

A summary of a vehicle drive device (100) described above will be described below.

A vehicle drive device (100) includes:
an input member (I) that is drive-coupled to an internal combustion engine (EG) included in a vehicle;
an output member (O1) that is drive-coupled to wheels (W1);
a rotating electrical machine (MG1) including a rotor (Ro1);
a distribution differential gear mechanism (SP) including a first rotating element (E1), a second rotating element (E2), and a third rotating element (E3), the first rotating element (E1) being drive-coupled to the input member (I), and the third rotating element (E3) being drive-coupled to the rotor (Ro1);
a first engagement device (CL1) that disengages and engages power transmission between the input member (I) and the first rotating element (E1);
a second engagement device (CL2) that disengages and engages power transmission between two rotating elements selected from among three rotating elements, the first rotating element (E1), the second rotating element (E2), and the third rotating element (E3); and
a control device (10) that controls the rotating electrical machine (MG1), the internal combustion engine (EG), the first engagement device (CL1), and the second engagement device (CL2), and
the distribution differential gear mechanism (SP) is formed such that order of rotational speed is the first rotating element (E1), the second rotating element (E2), and the third rotating element (E3),
a first mode and a second mode are provided as operating modes,
in the first mode, the first engagement device (CL1) is brought into an engaged state and the second engagement device (CL2) is brought into a disengaged state, to output a combination of drive power of the rotating electrical machine (MG1) and drive power of the internal combustion engine (EG) to the output member (O1) from the second rotating element (E2) through the distribution differential gear mechanism (SP),
in the second mode, the first engagement device (CL1) is brought into a disengaged state and the second engagement device (CL2) is brought into an engaged state, and
the control device (10)
determines whether predicted required drive power (Tf) which is drive power predicted to be required for the vehicle is greater than a defined first threshold value (TH1) set within a range of drive power that can be outputted in the second mode,
sets the operating mode to the first mode to control the rotating electrical machine (MG1) and the internal combustion engine (EG) to output actual required drive power (Ta) which is drive power currently required for the vehicle, when it is determined that the predicted required drive power (Tf) is greater than the first threshold value (TH1) or when the actual required drive power (Ta) is greater than the first threshold value (TH1), and
sets the operating mode to the second mode to control the rotating electrical machine (MG1) to output the actual required drive power (Ta), when the actual required drive power (Ta) is less than or equal to the first threshold value (TH1) and it is determined that the predicted required drive power (Tf) is less than or equal to the first threshold value (TH1).

According to this configuration, even when currently required drive power (actual required drive power (Ta)) is less than or equal to the first threshold value (TH1), it is predicted whether future required drive power (predicted required drive power (Tf)) is greater than the first threshold value (TH1). If it is predicted that the future required drive power (predicted required drive power (Tf)) is greater than the first threshold value (TH1), then the operating mode is switched to the first mode so that the rotating electrical machine (MG1) and the internal combustion engine (EG) are driven. As such, when it is determined that the predicted required drive power (Tf) is greater than the first threshold value (TH1), the internal combustion engine (EG) is brought into an operating state at a stage before the actual required drive power (Ta) becomes greater than the first threshold value (TH1). By this, when the actual required drive power (Ta) has become greater than the first threshold value (TH1), the operating mode is already set to the first mode and the internal combustion engine (EG) is already in an operating state. Hence, after the actual required drive power (Ta) has become greater than the first threshold value (TH1), a process of switching the operating mode to the first mode and a process of starting the internal combustion engine (EG) can be omitted. Thus, when switching is performed from a state in which the internal combustion engine (EG) is stopped to an operating mode in which required drive power is outputted using drive power of the internal combustion engine (EG), drive power corresponding to the required drive power can be promptly outputted.

In addition, according to this configuration, in the first mode, using torque of the rotating electrical machine (MG1) as a reaction force, torque of the internal combustion engine (EG) is amplified, and the amplified torque is transmitted to the output member (O1) from the second rotating element (E2), by which the vehicle can travel. Thus, even when actual required drive power (Ta) is high, the actual required drive power (Ta) can be appropriately outputted by the rotating electrical machine (MG1) and the internal combustion engine (EG).

Here, it is preferred that
a setting state of the vehicle include a normal output setting that outputs normal drive power; and a high output setting that outputs higher drive power than the normal output setting, and
when the setting state of the vehicle is the high output setting, the control device (10) determine that the predicted required drive power (Tf) is greater than the first threshold value (TH1).

In a case in which the vehicle can set a normal output setting and a high output setting, when the setting state of the vehicle is the high output setting, required drive power is likely to be high. Hence, according to this configuration, when the setting state of the vehicle is the high output setting, it is determined that predicted required drive power (Tf) is greater than the first threshold value (TH1), by which the possibility that drive power corresponding to required drive power can be promptly outputted can be increased.

In addition, it is preferred that the control device (10) determine that the predicted required drive power (Tf) is greater than the first threshold value (TH1), on condition that at least one of cases is satisfied, the cases including a case in which a travel road gradient which is a gradient of a portion of a road on which the vehicle is currently traveling is greater than a defined gradient threshold value, the portion being located ahead in a traveling direction; a case in which a towing weight which is the weight of a towing target for a case of the vehicle towing is greater than a defined towing threshold value; and a case in which an amount of wheel slip which is the amount of slip of the wheels (W1) relative to the ground is greater than a defined slip threshold value.

In each of a case in which the travel road gradient is large, a case in which the towing weight is large, and a case in which the amount of wheel slip is large, required drive power is likely to be high. Hence, according to this configuration, it is determined that predicted required drive power (Tf) is greater than the first threshold value (TH1), on condition that at least one of those cases is satisfied, by which the possibility that drive power corresponding to required drive power can be promptly outputted can be increased.

In addition, it is preferred that
a third mode be further provided as the operating mode,
in the third mode, both of the first engagement device (CL1) and the second engagement device (CL2) be brought into an engaged state, and
when it is determined that the predicted required drive power (Tf) is greater than the first threshold value (TH1) or when the actual required drive power (Ta) is greater than the first threshold value (TH1),
the control device (10) set the operating mode to the third mode instead of the first mode, to control the rotating electrical machine (MG1) and the internal combustion engine (EG) to output the actual required drive power (Ta), when a speed (V) of the vehicle is greater than or equal to a defined second threshold value (TH2), and
the second threshold value (TH2) correspond to a speed (V) of the vehicle at which a rotational speed of the internal combustion engine (EG) achieves an idling rotational speed when both of the first engagement device (CL1) and the second engagement device (CL2) are in an engaged state.

In the third mode, the second engagement device (CL2) is brought into an engaged state to transmit drive power of the internal combustion engine (EG) and the rotating electrical machine (MG1) to the output member (O1) without the distribution differential gear mechanism (SP) in a differential state therebetween, and thus, when the speed (V) of the vehicle is relatively high, energy efficiency is more easily increased over the first mode. According to this configuration, in a case in which it is determined that the predicted required drive power (Tf) is greater than the first threshold value (TH1) or a case in which the actual required drive power (Ta) is greater than the first threshold value (TH1), when the speed (V) of the vehicle is relatively high, the operating mode is switched to the third mode. Thus, when the speed (V) of the vehicle is relatively high, while the energy efficiency of the vehicle drive device (100) is increased, the possibility that drive power corresponding to required drive power can be promptly outputted can be increased.

### INDUSTRIAL APPLICABILITY

A technique according to the present disclosure can be used in a vehicle drive device having a plurality of operating modes.

### REFERENCE SIGNS LIST

100: Vehicle drive device, 10: Control device, I: Input member, O1: First output member (output member), SP: Distribution differential gear mechanism, E1: First rotating element, E2: Second rotating element, E3: Third rotating element, CL1: First engagement device, CL2: Second engagement device, MG1: First rotating electrical machine (rotating electrical machine), Ro1: First rotor (rotor), EG: Internal combustion engine, and W1: First wheel (wheel)

## Claims

1. A vehicle drive device comprising:
an input member that is drive-coupled to an internal combustion engine included in a vehicle;
an output member that is drive-coupled to wheels;
a rotating electrical machine including a rotor;
a distribution differential gear mechanism including a first rotating element, a second rotating element, and a third rotating element, the first rotating element being drive-coupled to the input member, and the third rotating element being drive-coupled to the rotor;
a first engagement device that disengages and engages power transmission between the input member and the first rotating element;
a second engagement device that disengages and engages power transmission between two rotating elements selected from among three rotating elements, the first rotating element, the second rotating element, and the third rotating element; and
a control device that controls the rotating electrical machine, the internal combustion engine, the first engagement device, and the second engagement device,
wherein
the distribution differential gear mechanism is formed such that order of rotational speed is the first rotating element, the second rotating element, and the third rotating element,
a first mode and a second mode are provided as operating modes,
in the first mode, the first engagement device is brought into an engaged state and the second engagement device is brought into a disengaged state, to output a combination of drive power of the rotating electrical machine and drive power of the internal combustion engine to the output member from the second rotating element through the distribution differential gear mechanism,
in the second mode, the first engagement device is brought into a disengaged state and the second engagement device is brought into an engaged state, and
the control device
determines whether predicted required drive power is greater than a defined first threshold value set within a range of drive power that can be outputted in the second mode, the predicted required drive power being drive power predicted to be required for the vehicle,
sets the operating mode to the first mode to control the rotating electrical machine and the internal combustion engine to output actual required drive power, when it is determined that the predicted required drive power is greater than the first threshold value or when the actual required drive power is greater than the first threshold value, the actual required drive power being drive power currently required for the vehicle, and
sets the operating mode to the second mode to control the rotating electrical machine to output the actual required drive power, when the actual required drive power is less than or equal to the first threshold value and it is determined that the predicted required drive power is less than or equal to the first threshold value.

2. The vehicle drive device according to claim 1, wherein
a setting state of the vehicle includes a normal output setting that outputs normal drive power; and a high output setting that outputs higher drive power than the normal output setting, and
when the setting state of the vehicle is the high output setting, the control device determines that the predicted required drive power is greater than the first threshold value.

3. The vehicle drive device according to claim 1 or 2, wherein the control device determines that the predicted required drive power is greater than the first threshold value, on condition that at least one of cases is satisfied, the cases including a case in which a travel road gradient is greater than a defined gradient threshold value, the travel road gradient being a gradient of a portion of a road on which the vehicle is currently traveling, and the portion being located ahead in a traveling direction; a case in which a towing weight is greater than a defined towing threshold value, the towing weight being a weight of a towing target for a case of the vehicle towing; and a case in which an amount of wheel slip is greater than a defined slip threshold value, the amount of wheel slip being an amount of slip of the wheels relative to ground.

4. The vehicle drive device according to any one of claims 1 to 3, wherein
a third mode is further provided as the operating mode,
in the third mode, both of the first engagement device and the second engagement device are brought into an engaged state, and
when it is determined that the predicted required drive power is greater than the first threshold value or when the actual required drive power is greater than the first threshold value,
the control device sets the operating mode to the third mode instead of the first mode, to control the rotating electrical machine and the internal combustion engine to output the actual required drive power, when a speed of the vehicle is greater than or equal to a defined second threshold value, and
the second threshold value corresponds to a speed of the vehicle at which a rotational speed of the internal combustion engine achieves an idling rotational speed when both of the first engagement device and the second engagement device are in an engaged state.
